# EUROPÄISCHE PATENTANMELDUNG

(11) **EP 2 594 331 A1**
(43) Veröffentlichungstag der Anmeldung: **22.05.2013**
(21) Anmeldenummer: 13154877.8
(22) Anmeldetag: 20.02.2009
(51) Int. Cl.: B01F 3/04, B01F 5/04, B01F 5/20, B01F 13/10

(54) **Verfahren und Vorrichtung zur Begasung von Flüssigkeiten**

(30) Priorität: 05.03.2008 DE 102008012725
(62) Teilanmeldung aus: 09716818.1
(71) Anmelder: United Waters International AG, 6304 Zug (CH)
(72) Erfinder: Brunner, Willi, 8542 Wiesendangen (CH); Tannenberg, Dan, 461 95 Trollhättan (SE)
(74) Vertreter: Albrecht, Ralf

(57) **Zusammenfassung**

Die Erfindung betrifft ein Verfahren und eine Vorrichtung zur Begasung von Flüssigkeiten, insbesondere zur Belüftung von Wasser, bei dem einem Mischrohr (2) Gas über einen Gaszutritt (7) und Flüssigkeit über einen Flüssigkeitszutritt (13) unter Bildung einer Mischung aus Gas und Flüssigkeit zugeführt wird, das dadurch gekennzeichnet ist, dass die Flüssigkeit zentral über ein Zuführrohr (12) und dessen Mündungsöffnung (13) in das Mischrohr (2) eingeführt und im Bereich der Mündungsöffnung (13) durch Aufprall auf einen Spreizkörper (18) aufgespreizt wird.

## Beschreibung

Die Erfindung betrifft ein Verfahren zur Belüftung von Wasser, bei dem einem Mischrohr Luft über einen Luftzutritt und Wasser über einen Wasserzutritt unter Bildung einer Mischung aus Luft und Wasser zugeführt wird, wobei das Wasser zentral über ein Zuführrohr und dessen Mündungsöffnung in das Mischrohr eingeführt und im Bereich der Mündungsöffnung durch Aufprall auf einen Spreizkörper aufgespreizt wird. Die Erfindung betrifft des Weiteren eine Vorrichtung zur Durchführung des Verfahrens.

Für verschiedene Zwecke ist es erforderlich, eine Flüssigkeit mit einem Gas zu versehen oder anzureichern. Besonders häufig wird die Belüftung von Wasser, insbesondere von Gewässern, um den Sauerstoffgehalt des Wassers zu erhöhen und damit die Lebensbedingungen für Pflanzen und/oder Fische zu verbessern oder ein Umkippen des Gewässers zu verhindern.

In der US 2,591,134 A ist eine gattungsgemäße Vorrichtung zur Belüftung von Wasser offenbart, bei der in einem Mischrohr ein Zuführrohr zentral hineinragt und eine in Richtung auf die Austrittsöffnung des Mischrohrs gerichtete Mündungsöffnung aufweist, wobei das Zuführrohr mit einer unter Druck stehenden Wasserquelle verbunden ist. In der Mündungsöffnung des Zuführrohrs ist ein Spreizkörper angeordnet, der ein Aufspreizen der Flüssigkeit und damit dessen Vermischung mit der Luft zu einer Mischung aus Wasser und Luft bewirkt. Das Mischrohr besteht aus zwei in Strömungsrichtung hintereinander angeordneten Konusabschnitten, die an ihren einander zugewandten Enden eine Querschnittsverengung ausbilden. Die Mündungsöffnung des Zuführrohrs ist in Bezug auf die Querschnittsverengung so angeordnet, dass sich der beim Austreten des Wassers bildende Mischungskegel durch die Querschnittsverengung nicht beschränkt wird.

In der US 743,528 ist eine Vorrichtung zur Belüftung von Urinalen dargestellt, bei der in einem zylindrischen Mischrohr ein Zuführrohr für die Zufuhr von Wasser zentral hineinragt. Das Zuführrohr hat eine Mündungsöffnung und ist mit einem unter Druck stehenden Wasserreservoir verbunden. In der Mündungsöffnung des Zuführrohrs ist ein Spreizkörper angeordnet, der ein Aufspreizen des Wassers und damit dessen Vermischung mit der hierdurch angesaugten Luft bewirkt.

Der US 4,375,185 ist eine Vorrichtung zur Hitzebehandlung von Milch zu entnehmen, bei dem die Milch über ein zentrales Zuführrohr in einen Tank eingeleitet wird, wobei die Milch mit Hilfe eines Spreizkörpers beim Austritt aus der Mündungsöffnung des Zuführrohrs aufgespreizt wird. Dabei mündet das Zuführrohr innerhalb eines größeren Rohrs. Dieses Rohr ist von einem Ringkanal umgeben, dem Dampf zugeführt werden kann, der dann über ein Lochblech austritt. Dabei kommt es erst im Tank selbst zu einer Vermischung von Milch und Dampf.

Schließlich ist aus der US 5,372,283 A eine Mischvorrichtung für die Zuführung einer Mischung aus zwei Polymerkomponenten bekannt, wobei ein Zuführrohr in einem Mischrohr mündet und dort die beiden Komponenten miteinander vermischt werden.

Zur aeroben Behandlung von Klärschlämmen ist durch die CH 642 563 A5 ein Verfahren bekannt, bei dem Klärschlamm über einen gebogenen Rohrstutzen und über ein Kegelventil in ein Mischrohr eingeführt wird. Das Kegelventil hat einen Ventilkörper, der zwischen einer Schließstellung und einer stromabwärts liegenden Offenstellung verschieblich geführt ist. Der Ventilkörper ist von einem geraden Luftzuführrohr durchsetzt, das gleichzeitig die Funktion einer Ventilstange einnimmt und zusammen mit dem Ventilkörper axial verschieblich geführt ist. In Offenstellung des Ventilkörpers und bei Zuführung von Klärschlamm wird über das Luftzuführrohr Luft angesaugt, die zentral in das Mischrohr eintritt. Nachteilig bei diesem Verfahren ist, dass die Vermischung zwischen Klärschlamm und Luft über den Querschnitt sehr ungleichmäßig ist.

Daneben sind hydrodynamische Kavitationsmischer zur Erzeugung flüssiger Systeme, insbesondere von Emulsionen, Suspensionen oder dergleichen, bekannt, bei denen durch besondere Ausgestaltungen innerhalb eines Mischrohres Kavitationszonen erzeugt werden, in denen ein koordiniertes Zerplatzen von Kavitationsbläschen in lokalem Umfang bei gleichzeitiger Bildung von Druckwellen hoher Energie erzeugt werden. Beispiele hierfür sind der DE 44 33 744 A1 und DE 10 2005 037 026 A1 zu entnehmen. Bei beiden Kavitationsmischern wird - wie auch schon bei der Vorrichtung gemäß der CH 642 563 A5 - Luft zentral in ein Mischrohr zugeführt, und zwar einmal mit dem Flüssigkeitsstrom (DE 44 33 744 A1) und einmal gegen den Flüssigkeitsstrom (DE 10 2005 037 026 A1). Dabei ist bei dem Kavitationsmischer nach der DE 44 33 744 A1 in das zentrale Luftzuführrohr ein Kegelkörper in dessen Mündungsöffnung eingesetzt.

Der Erfindung liegt die Aufgabe zugrunde, ein Verfahren bereitzustellen, mit dem eine wesentlich höhere und über den Querschnitt gleichmäßigere Anreicherung von Wasser mit Luft erzielt wird. Eine weitere Aufgabe besteht darin, eine für die Durchführung des Verfahrens geeignete Vorrichtung bereitzustellen.

Die das Verfahren betreffende Aufgabe wird erfindungsgemäß dadurch gelöst, dass eine Beschleunigung der Mischung dadurch bewirkt wird, dass der Durchströmquerschnitt für die Mischung stromabwärts der Mündungsöffnung verengt wird, und dass das Wasser durch einen Spreizkörper aufgespreizt wird, der zumindest teilweise aus der Mündungsöffnung heraus- und in das Mischrohr hineinragt. Versuche haben gezeigt, dass hierdurch ein Wasser-Luft-Verhältnis von mehr als 1:5 erzielbar ist, ein Verhältnis, das weit größer ist, als bei bekannten Verfahren.

Die Querschnittsverengung kann als konusförmige Blende mit sich stromabwärts verengendem Querschnitt ausgebildet sein. Nach der Blende hat das Mischrohr wieder seinen ursprünglichen Querschnitt, so dass nach Beschleunigung der Strömung durch die Blende eine Art Diffuserwirkung entsteht.

Um eine gleichmäßige Spreizung des Wassers zu erzielen, sollte ein Spreizkörper verwendet werden, der um eine zur Mittelachse der Mündungsöffnung zentrische Achse achssymmetrisch ausgebildet ist. Auf diese Weise entsteht ein gespreizter, in Sonderheit ringförmiger Wasserstrahl mit großer Oberfläche für die Vermischung zwischen Wasser und Luft. Dabei ist es für das Aufspreizen zweckmäßig, wenn sich der Querschnitt des Spreizkörpers in Fließrichtung vergrößert. Für das Aufspreizen besonders geeignet ist die Form eines Kegelkörpers, wobei die Mantellinie auch sphärisch konkav und damit einer Pilzform angenähert ausgebildet sein kann. Insbesondere bei rechteckigem oder quadratischem Zuführrohr kommt jedoch auch die Verwendung eines Pontonkörper als Spreizkörper in Frage.

Der größte Querschnitt des Spreizkörpers sollte größer sein als der Öffnungsquerschnitt der Mündungsöffnung.

Nach einem weiteren Merkmal der Erfindung ist vorgeschlagen, dass die Mischung an einer Austrittsöffnung des Mischrohrs auf einen Verdrängungskörper aufprallt, der der Austrittsöffnung zugeordnet ist. Hierdurch wird eine Art Brauseeffekt ausgelöst, der zu einer optimalen Flächenverteilung des ausströmenden Wasser-Luft-Gemischs und einer nochmaligen, intensiven Durchmischung führt. Vorzugsweise sollte ein Verdrängungskörper verwendet werden, der um eine zur Mittelachse der Austrittsöffnung zentrische Achse achssymmetrisch ausgebildet ist, um eine gleichmäßige Verteilung zu erzielen. Dabei sollte sich der Durchmesser des Verdrängungskörpers in Austrittsrichtung vergrößern. Der Verdrängungskörper kann beispielsweise als Prallteller und/oder als Kegelkörper mit gerader oder sphärisch gebogener Mantellinie oder als Pontonkörper ausgebildet sein.

Nach der Erfindung ist ferner vorgeschlagen, dass die Mischung auf einen außerhalb des Mischrohrs angeordneten Verdrängungskörper aufprallt. Der größte Querschnitt des Verdrängungskörpers ist vorzugsweise größer als der freie Querschnitt der Austrittsöffnung.

Schließlich ist nach der Erfindung vorgesehen, dass die Mischung im Mischrohr im Bereich der Austrittsöffnung über einen Bogenabschnitt des Mischrohrs umgelenkt wird. Dies erleichtert das Herausführen der Einstellstange für den Verdrängungskörper.

Der zweite Aufgabenteil wird erfindungsgemäß durch eine Vorrichtung zur Belüftung von Wasser gelöst, die ein Mischrohr, das eine Eintrittsöffnung und eine Austrittsöffnung aufweist, insbesondere im Bereich der Austrittsöffnung einen Bogenabschnitt aufweist, und ein Zuführrohr hat, das zentral in das Mischrohr hineinragt und eine in Richtung der Austrittsöffnung gerichtete Mündungsöffnung aufweist, wobei das Zuführrohr mit einer unter Druck stehenden Wasserquelle verbunden oder verbindbar ist und wobei in der Mündungsöffnung ein Spreizkörper angeordnet ist, der ein Aufspreizen des Wassers und damit dessen Vermischung mit der Luft zu einer Mischung aus Wasser und Luft bewirkt und insbesondere in Richtung der Mittelachse des Zuführrohrs axial verschieblich geführt ist. Erfindungsgemäß weist das Mischrohr eine Querschnittsverengung für die Mischung stromabwärts der Mündungsöffnung auf, die als konusförmige Blende mit sich stromabwärts verengendem Querschnitt ausgebildet ist und eine Beschleunigung der Mischung bewirkt, wobei der Spreizkörper zumindest teilweise aus der Mündungsöffnung heraus- und in das Mischrohr hineinragt und der Spreizkörper mit einer Verstelleinrichtung gekoppelt ist, über die er von außen axial verschiebbar ist. Durch Verwendung dieser Vorrichtung werden die im Zusammenhang mit dem erfindungsgemäßen Verfahren beschriebenen Vorteile erzielt, insbesondere die intensive und gleichmäßige Durchmischung und Belüftung von Waser mit Luft.

Die Mündungsöffnung und der Spreizkörper weisen zweckmäßigerweise komplementäre Ventilsitzflächen auf, so dass der Spreizkörper gleichzeitig auch als Ventilkörper zum Verschließen der Mündungsöffnung benutzt werden kann. Hierzu sollte der Spreizkörper in Richtung der Mittelachse des Zuführrohrs axial verschieblich geführt sein, um den Spalt zwischen Mündungsöffnung und Spreizkörper einstellen und hierdurch beispielsweise eine Anpassung an unterschiedliche Drücke der Flüssigkeit vornehmen zu können.

Die Verstelleinrichtung kann eine Verstellstange aufweisen, auf der der Spreizkörper sitzt und die aus dem Zuführrohr herausführt. Um eine gute Führung der Verstellstange zu gewährleisten, sollte sie einerseits in einer Wandung des Zuführrohrs und andererseits in einem Lager im Mischrohr geführt sein. Die Verstellstange kann über eine Handrad oder andere handhabbare Einrichtungen, aber auch über einen elektrischen Verstellmotor verschoben werden.

Die Mündungsöffnung des Zuführrohrs sollte so angeordnet werden, dass sie in einem geraden Abschnitt des Mischrohrs liegt. Für die Zuführung des Gases sollte dem Mischrohr ein bogenförmiger, auf das Zuführrohr gerichteter Zuführabschnitt zugeordnet sein, der in der Gaszutrittsöffnung endet.

Die Austrittsöffnung des Mischrohrs und der ihr zugeordnete Verdrängungskörper sollten komplementäre Ventilsitzflächen erhalten, so dass der Verdrängungskörper als Ventilkörper zum Verschließen des Mischrohrs verwendet werden kann. Hierzu ist es zweckmäßig, wenn der Verdrängungskörper in Richtung der Mittelachse der Austrittsöffnung axial verschieblich geführt ist.

Nach der Erfindung ist ferner vorgesehen, dass der Verdrängungskörper mit einer Einstelleinrichtung gekoppelt ist, über die er von außen axial verschiebbar ist. Die Einstelleinrichtung kann eine Einstellstange aufweisen, auf der der Verdrängungskörper sitzt und die aus dem Mischrohr heraus geführt ist. Zur Lagerung der Verstellstange sollte sie einerseits in einer Wandung des Mischrohrs und andererseits im Mischrohr im Bereich der Austrittsöffnung geführt sein. Die Verstellung der Einstellstange kann dann von Hand, beispielsweise über ein Handrad oder dergleichen, erfolgen, aber auch über einen mit der Einstellstange gekoppelten Einstellmotor.

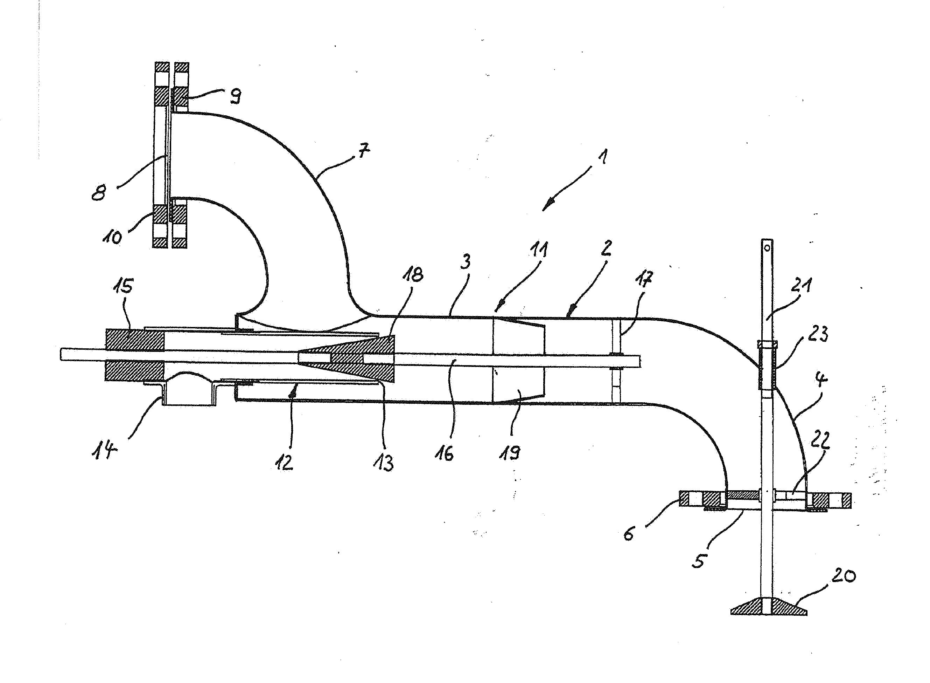

In der Zeichnung ist die erfindungsgemäße Vorrichtung anhand eines Ausführungsbeispiels näher veranschaulicht. Sie zeigt die Vorrichtung 1 zur Belüftung von Wasser in einem Längsschnitt.

Die Vorrichtung 1 hat ein Mischrohr 2 mit einem geraden Abschnitt 3 und einem sich daran in Strömungsrichtung anschließenden, gebogenen Abschnitt 4, der in einer Austrittsöffnung 5 endet. Die Austrittsöffnung 5 ist von einem Flansch 6 umgeben, über den die Austrittsöffnung 5 beispielsweise an der Öffnung eines Tanks angeschlossen werden kann.

Am stromaufwärtigen Ende des Mischrohrs 2 mündet ein bogenförmiger Luftzuführabschnitt 7, der an seinem freien Ende eine Luftzutrittsöffnung 8 aufweist, welche von einem Flasch 9 umgeben ist. Der Flansch 9 ist einem Gegenflansch 10 zugeordnet. Beide Flansche 9, 10 sind miteinander verschraubbar. Luftzuführabschnitt 7 und Mischrohr 2 mit dem geraden Abschnitt 3 und dem gebogenen Abschnitt 4 bilden das Hauptrohr 11 der Vorrichtung 1.

In das stromaufwärtige Ende des Mischrohrs 2 ragt ein gerades Zuführrohr 12 hinein, dass in dem geraden Abschnitt 3 des Mischrohrs 2 stromabwärts der Mündung des Luftzuführabschnitts 7 in das Mischrohr 2 in einer Mündungsöffnung 13 endet. Mischrohr 2 und Zuführrohr 12 haben einen gleichbleibenden, kreisförmigen Querschnitt. Das Zuführrohr 12 verläuft koaxial zur Längsachse des geraden Abschnittes 3 des Mischrohrs 2. Außerhalb des Mischrohrs 2 hat das Zuführrohr 12 eine rechtwinklich einmündenden Stutzen 14, über den das Zuführrohr 12 an eine Wasserzuführleitung angeschlossen werden kann, die mit einer Wasserpumpe für den Druckaufbau versehen sein kann. Das aus dem Mischrohr 2 herausragende Ende des Zuführrohrs 12 ist mit einer Dichtung 15 abgeschlossen.

Das Zuführrohr 12 und den geraden Abschnitt 3 des Mischrohrs 2 durchsetzt eine Verstellstange 16 in zu beiden koaxialer Anordnung. Die Verstellstange 16 ist einerends in der Dichtung 15 und anderernends in einem Lagerstern 17 axial verschieblich geführt. Der Lagerstern 17 ist mit der Innenseite des Mischrohrs 2 verbunden. Außerhalb des Zuführrohrs 12 ist eine hier nicht näher dargestellte Verstelleinrichtung vorgesehen, über die die Verstellstange 16 axial verschoben werden kann, sei es motorisch oder von Hand.

Auf der Verstellstange 16 sitzt im Bereich der Mündungsöffnung 13 ein Kegelkörper 18, dessen Durchmesser sich in Stromabwärtsrichtung vergrößert. Er ragt teilweise aus dem Zuführrohr 12 heraus. Je nach axialer Stellung der Verstellstange 16 und damit des Kegelkörpers 18 entsteht zwischen dem Innenrand der Mündungsöffnung 13 und dem Mantel des Kegelkörpers 18 ein mehr oder weniger großer Ringspalt. Er ist um so größer, je mehr der Kegelkörper 18 in Stromabwärtsrichtung verstellt ist.

Zwischen Mündungsöffnung 13 des Zuführrohrs 12 und dem Lagerstern 17 ist eine Konusblende 19 angeordnet, die am stromaufwärtigen Ende mit der Innenseite des Mischrohrs 2 verbunden ist und in Stromabwärtsrichtung den Querschnitt des Mischrohrs 2 konusförmig verkleinert. Hinter der Konusblende 19 entspricht der Querschnitt wiederum dem des Mischrohrs 2.

Der Austrittsöffnung 5 des Mischrohrs 2 zugeordnet ist eine Prallteller 20, der konusförmig mit sich in Fließrichtung vergrößernden Durchmesser ausgebildet ist. Er ist am aus der Austrittsöffnung 5 herausragenden Ende einer Einstellstange 21 befestigt, die die Austrittsöffnung 5 durchsetzt und dort in einem Lagerstern 22 axial verschieblich und koaxial zur Austrittsachse der Austrittsöffnung 5 geführt ist. Nach oben hin durchsetzt die Einstellstange 21 den gebogenen Abschnitt 4 des Mischrohrs 2 in einer Dichtungsbuchse 23. Am dort herausragenden Ende ist - wie bei der Verstellstange 16 - eine Einstelleinrichtung vorgesehen, über die der Abstand zwischen Austrittsöffnung 5 und Prallteller 20 durch axiale Verschiebung der Einstellstange 21 justiert werden kann.

Die gezeigte Vorrichtung 1 arbeitet im Betrieb wie folgt. Über den Stutzen 14 wird unter ggf. mit einer Pumpe erzeugten Druck stehendes Wasser dem Zuführrohr 12 zugeführt. Im Bereich des Kegelkörpers 18 wird das Wasser nach außen gedrängt und tritt in Form eines gefächerten Ringstrahls über den zwischen Mündungsöffnung 13 und Kegelkörper 18 gebildeten Ringspalt in das Mischrohr 2 ein. Hierdurch wird über die Luftzutrittsöffnung 8 und den Luftzuführabschnitt 7 Luft angesaugt, die sich intensiv mit dem aus dem Zuführrohr 12 austretenden, gefächerten Wasserstrahl vermischt. Dies wird unterstützt durch die Konusblende 19, die eine Beschleunigung des Wasser-Luft-Gemischs bewirkt. Das Gemisch tritt dann in den gebogenen Abschnitt 4 des Mischrohrs 2 ein und strömt über die Austrittsöffnung 5 beispielsweise in einen Tank. Dabei prallt das Gemisch auf den Prallteller 20 und wird hierdurch breit gefächert, wodurch eine nochmalige Belüftung des Wassers bewirkt wird.

## Patentansprüche

1. Verfahren zur Belüftung von Wasser, bei dem einem Mischrohr (2) Luft über einen Luftzutritt (7) und Wasser über einen Wasserszutritt (13) unter Bildung einer Mischung aus Luft und Wasser zugeführt wird, wobei das Wasser zentral über ein Zuführrohr (12) und dessen Mündungsöffnung (13) in das Mischrohr (2) eingeführt und im Bereich der Mündungsöffnung (13) durch Aufprall auf einen Spreizkörper (18) aufgespreizt wird, **dadurch gekennzeichnet, dass** eine Beschleunigung der Mischung dadurch bewirkt wird, dass der Durchströmquerschnitt für die Mischung stromabwärts der Mündungsöffnung (13), vorzugsweise mittels einer konusförmigen Blende mit sich stromabwärts verengenden Querschnitt verengt wird, das Wasser durch einen Spreizkörper (18) aufgespreizt wird, der zumindest teilweise aus der Mündungsöffnung (13) heraus- und in das Mischrohr hineinragt.

2. Verfahren nach Anspruch 1, **dadurch gekennzeichnet, dass** das Wasser mittels eines Spreizkörpers (18) aufgespreizt wird, der um eine zur Mittelachse der Mündungsöffnung (13) konzentrische Achse achssymmetrisch ausgebildet ist, insbesondere wobei sich der Querschnitt des Spreizkörpers (18) in Fließrichtung des Wassers vergrößert, und/oder dass das Wasser durch einen als Kegelkörper ausgebildeten Spreizkörper (18) aufgespreizt ist.

3. Verfahren nach einem der Ansprüche 1 oder 2, **dadurch gekennzeichnet, dass** die größte Quererstreckung des Spreizkörpers (18) größer ist als der freie Querschnitt der Mündungsöffnung (13).

4. Verfahren nach einem der Ansprüche 1 bis 3, **dadurch gekennzeichnet, dass** die Mischung an einer Austrittsöffnung (5) des Mischrohrs (2) auf einen Verdrängungskörper (20) aufprallt und/oder dass die Mischung auf einen Verdrängungskörper (20) aufprallt, der um eine zur Mittelachse der Austrittsöffnung konzentrische Achse symmetrisch ausgebildet ist.

5. Verfahren nach Anspruch 4, **dadurch gekennzeichnet, dass** die Mischung auf einen Verdrängungskörper (20) aufprallt, dessen Quererstreckung sich in Austrittsrichtung vergrößert und/oder der als Prallteller oder Kegelkörper ausgebildet ist und/oder außerhalb des Mischrohrs sitzt und/oder dessen größte Quererstreckung größer ist als der freie Querschnitt der Austrittsöffnung (5) und/oder die Mischung im Mischrohr (2) im Bereich der Austrittsöffnung (5) über einen Bogenabschnitt (4) des Mischrohrs (2) umgelenkt wird.

6. Vorrichtung (1) zur Belüftung von Wasser, mit einem Mischrohr (2), das eine Eintrittsöffnung (7, 8) und eine Austrittsöffnung (5) aufweist, insbesondere im Bereich der Austrittsöffnung (5) einen Bogenabschnitt (4) aufweist, und mit einem Zuführrohr (12), das zentral in das Mischrohr (2) hineinragt und eine in Richtung der Austrittsöffnung (5) gerichtete Mündungsöffnung (13) aufweist, wobei das Zuführrohr (12) mit einer unter Druck stehenden Wasserquelle verbunden oder verbindbar ist und wobei in der Mündungsöffnung (13) ein Spreizkörper (18) angeordnet ist, der ein Aufspreizen des Wassers und damit dessen Vermischung mit der Luft zu einer Mischung aus Wasser und Luft bewirkt und in Richtung der Mittelachse des Zuführrohrs (12) axial verschieblich geführt ist, **dadurch gekennzeichnet, dass** das Mischrohr (2) eine Querschnittsverengung (19) für die Mischung stromabwärts der Mündungsöffnung (13) aufweist, die als konusförmige Blende (19) mit sich stromabwärts verengendem Querschnitt ausgebildet ist und eine Beschleunigung der Mischung bewirkt, wobei der Spreizkörper (18) zumindest teilweise aus der Mündungsöffnung (13) heraus- und in das Mischrohr (2) hineinragt und der Spreizkörper (18) mit einer Verstelleinrichtung gekoppelt ist, über die er von außen axial verschiebbar ist.

7. Vorrichtung nach Anspruch 6, **dadurch gekennzeichnet, dass** der Spreizkörper (18) um eine zur Mittelachse der Mündungsöffnung (13) konzentrische Achse achssymmetrisch ausgebildet ist, insbesondere wobei sich der Querschnitt des Spreizkörpers (18) in Richtung auf die Austrittsöffnung (5) des Mischrohrs (2) vergrößert und/oder dass der Spreizkörper als Kegelkörper (18) ausgebildet ist.

8. Vorrichtung nach einem der Ansprüche 6 oder 7, **dadurch gekennzeichnet, dass** die größte Quererstreckung des Spreizkörpers (18) größer ist als der freie Querschnitt der Mündungsöffnung (13) und vorzugsweise die Mündungsöffnung (13) und der Spreizkörper (18) komplementäre Ventilsitzflächen aufweisen.

9. Vorrichtung nach einem der Ansprüche 6 bis 8, **dadurch gekennzeichnet, dass** die Verstelleinrichtung eine Verstellstange (16) aufweist, auf der der Spreizkörper (18) sitzt und die aus dem Zuführrohr (12) herausgeführt ist, insbesondere wobei die Verstellstange (16) einerseits in einer Wandung des Zuführrohrs (12) und andererseits in einem Lager (17) im Mischrohr (2) geführt ist und über einen Verstellmotor axial verschiebbar ist.

10. Vorrichtung nach einem der Ansprüche 6 bis 9, **dadurch gekennzeichnet, dass** die Mündungsöffnung (13) in einem geraden Abschnitt (3) des Mischrohrs (2) liegt und/oder dem Mischrohr (2) ein bogenförmiger, auf das Zuführrohr (12) gerichteter Luftzuführabschnitt (7) zugeordnet ist.

11. Vorrichtung nach einem der Ansprüche 6 bis 10, **dadurch gekennzeichnet, dass** der Austrittsöffnung (5) des Mischrohrs (2) ein Verdrängungskörper (20) zugeordnet ist, insbesondere wobei um eine zur Mittelachse der Austrittsöffnung (5) konzentrische Achse symmetrisch ausgebildet ist, vorzugsweise wobei sich die Quererstreckung des Verdrängungskörpers (20) in Austrittsrichtung vergrößert, vorzugsweise wobei der Verdrängungskörper als Prallteller (20) ausgebildet ist und/oder der Verdrängungskörper als Kegelkörper (20) ausgebildet ist und/oder der Verdrängungskörper (20) außerhalb des Mischrohrs (2) sitzt.

12. Vorrichtung nach Anspruch 11, **dadurch gekennzeichnet, dass** die größte Quererstreckung des Verdrängungskörpers (20) größer ist als der freie Querschnitt der Austrittsöffnung (5), insbesondere wobei die Austrittsöffnung (5) und der Verdrängungskörper (20) komplementäre Ventilsitzflächen aufweisen.

13. Vorrichtung nach einem der Ansprüche 11 oder 12, **dadurch gekennzeichnet, dass** der Verdrängungskörper (20) in Richtung der Mittelachse der Austrittsöffnung (5) axial verschieblich geführt ist und vorzugsweise mit einer Einstelleinrichtung gekoppelt ist, über die er von außen axial verschiebbar ist, insbesondere wobei die Einstelleinrichtung eine Einstellstange (21) aufweist, auf der der Verdrängungskörper (20) sitzt und die aus dem Mischrohr (2) herausgeführt ist und wobei dann die Einstellstange (21) einerseits in einer Wandung des Mischrohrs (2) und andererseits im Mischrohr (2) im Bereich der Austrittsöffnung (5) geführt sein kann.
